# EUROPÄISCHE PATENTSCHRIFT

(11) **EP 1 234 136 B1**
(45) Veröffentlichungstag und Bekanntmachung des Hinweises auf die Patenterteilung: **17.12.2003**
(21) Anmeldenummer: 00988706.8
(22) Anmeldetag: 16.11.2000
(51) Int. Cl.: F16L 13/14

(54) **VORRICHTUNG ZUR HERSTELLUNG EINER ROHRKUPPLUNG**
DEVICE FOR PRODUCING A PIPE COUPLING
DISPOSITIF POUR REALISER LE RACCORDEMENT DE TUYAUX

(30) Priorität: 02.12.1999 DE 19958102; 31.03.2000 DE 10016312
(43) Veröffentlichungstag der Anmeldung: 28.08.2002
(73) Patentinhaber: Selck GmbH & Co. KG, 18211 Bargeshagen (DE)
(72) Erfinder: KRAULEIDIS, Michael, 18209 Bad Doberan (DE)
(74) Vertreter: Schnick, Achim
(86) Internationale Anmeldenummer: EP0011323
(87) Internationale Veröffentlichungsnummer: WO01040696

(56) Entgegenhaltungen:
- US-A- 3 827 727
- US-A- 3 893 720
- US-A- 4 061 367
- US-A- 4 482 174

## Beschreibung

Die Erfindung betrifft eine Vorrichtung zur Herstellung einer Rohrkupplung zweier Rohrenden und insbesondere einer Rohrkupplung, die mindestens aus einem das Rohrende umgebenden Grundkörper und einem den Grundkörper umgebenden Preßmittel besteht, wobei durch axiales Verschieben der Preßmittel der Grundkörper radial in die Oberfläche des Rohres gedrängt wird.

Rohrverbindungen, die dieses Prinzip verwenden, sind durch die US-PS 3,827,727; US-PS 3,893,720; US-PS 4,026,006; US-PS 4,061,367; US-PS 4,482,174; US-PS 5,110,163 bekannt.

Der Nachteil dieser Rohrverbindungen besteht darin, daß sie beim Einsatz bezüglich der Größe des Rohrdurchmessers, der Qualitätsansprüche an das zu verbindende Rohr und der Höhe des Drucks des Mediums in ihrer Funktion begrenzt sind. Darüber hinaus bewirkt die konstruktive Gestaltung der in diesen Rohrkupplungen ausgebildeten Verdrängungspotentiale neben der gewollten radialen Materialverdrängung, die zur Erreichung einer druckdichten Verbindung zwingend notwendig ist, eine axiale Materialverdrängung, die nicht zur druckdichten Verbindung beiträgt, aber Einfluß auf die von außen aufzubringenden Preßkräfte in der Weise ausübt, daß die Preßkräfte über das für die radiale Materialverdrängung notwendige Maß hinausgehen. Damit ergibt sich von vornherein eine Überdimensionicrung sowohl des Preßwerkzeuges als auch einzelner Elemente der Rohrkupplung.

Der Erfindung liegt die Aufgabe zugrunde, eine druckdichte Rohrverbindung durch axiales Verpressen zu schaffen, die höchste Universalität bezüglich der Anforderungen an die Güte der zu verbindenden Rohre gewährleistet.

Eine weitere Aufgabe der Erfindung besteht darin, durch den Einsatz normaler handelsüblicher Rohre, z.B. geschweißter Rohre und der damit zulässigen Toleranzen bezüglich der mechanischen Eigenschaften und längenbezogenen Maße, aus unterschiedlichsten Werkstoffen, eine auch im Hochdruckbereich dichte Verbindung herzustellen.

Ferner ist es eine Aufgabe der Erfindung, die für das axiale Aufpressen der Preßelemente erforderlichen Kräfte und damit die für das Eindringen in die Rohroberfläche bei maximaler Eindringtiefe aufzubringende Kraft zu minimieren.

Diese Aufgaben werden durch eine Vorrichtung gemäß den Merkmalen des Hauptanspruchs gelöst.

Die Vorrichtung zur Herstellung einer druckdichten Rohrkupplung mit mindestens einem Rohrende, besteht aus einem hülsenförmigen, rotationssymmetrischen Grundkörper, wobei der Grundkörper mindestens einen im wesentlichen zylindrischen, mit Zahnmitteln ausgestatteten Innenraum zur Aufnahme des Rohrendes aufweist, und die Zahnmittel mittels über auf die Außenfläche des Grundkörpers wirkende Pressmittel radial in die Oberfläche des von dem Innenraum aufgenommenen Rohrendes verdrängt werden.

Der Grundkörper besteht aus einer hohlzylinderförmigen Kupplungshülse mit im wesentlichen gleichbleibender Wanddicke, wobei an der Innenseite der Kupplungshülse mindestens zwei untereinander beabstandete, gegenüber dem Innendurchmesser der Kupplungshülse zurückgesetzte, radial umlaufende Verzahnungen angeordnet sind. An der Außenseite der Kupplungshülse sind radial umlaufende, der jeweiligen Verzahnung gegenüberliegende flache Fixierungsmerkmale von einer der Breite der Verzahnung entsprechenden Breite ausgebildet.

Ein über die Kupplungshülse konzentrisch schiebbarer Druckring ist dazu vorgesehen, die Kupplungshülse in nahezu ihrer ganzen Länge zu überdecken, wobei der Druckring an seiner Innenseite radial umlaufende, mit den Fixierungsmerkmalen korrespondierende Vorsprünge aufweist und an seiner Außenseite eine von jedem Ende des Druckringes zu dessen Mitte gerichtete ansteigende kegelförmige Erweiterung aufweist.

Dem Druckring ist auf jeder Seite ein den Druckring konzentrisch umgebender Preßring zugeordnet, wobei jeder Preßring an seiner Innenseite eine der kegelförmigen Erweiterung des Druckringes entsprechende kegelförmige Erweiterung aufweist, so daß während der axialen Verschiebung der Preßringe gegeneinander aus einer beabstandeten Anfangsposition in eine nahezu abstandslose Endposition über die Vorsprünge und die mit den Vorsprüngen korrespondierenden Fixierungsmerkmale eine radiale Verdrängung der Verzahnungen in die Oberfläche des von der Kupplungshülse aufgenommenen Rohres erfolgt.

Weitere Merkmale der Erfindung sind in den Unteransprüchen aufgeführt.

Die Erfindung wird anhand eines Ausführungsbeispiels näher erläutert. Die dazugehörigen Zeichnungen zeigen in
Fig. 1 einen Längsschnitt durch eine beidseitig ausgeführte erfindungsgemäße Rohrkupplung, wobei links der Symmetrieachse A - A eine vorverpreßte und rechts der Symmetrieachse A - A eine verpreßte Hälfte der Rohrkupplung dargestellt ist;
Fig. 2 einen Längsschnitt durch die Rohrkupplung gemäß Fig. 1 mit eingesetzter Stützhülse;
Fig. 3 einen Längsschnitt durch die obere Hälfte der Rohrkupplung gemäß Fig. 1, bei der die gegenüberliegenden Preßringe durch Schrauben gegeneinander verschoben werden;
Fig. 4 einen Längsschnitt durch die obere Hälfte eines Druckringes mit einer gestuften kegelförmigen Ausbildung der Oberfläche;
Fig. 5 zwei Ansichten eines durch Schlitze segmentierten Druckringes;
Fig. 6 einen Längsschnitt durch die obere Hälfte einer anderen Ausführungsform der Rohrverbindung.
Fig. 7 einen Längsschnitt durch eine beidseitig ausgeführte erfindungsgemäße Rohrkupplung in einer anderen Ausführungsform;
Fig. 8 einen Längsschnitt durch eine Rohrkupplung gemäß Fig. 7, bei der der Druckring geteilt ist.
Fig. 9 einen Längsschnitt durch die erfindungsgemäße Rohrkupplung in einer weiteren Ausführungsform.

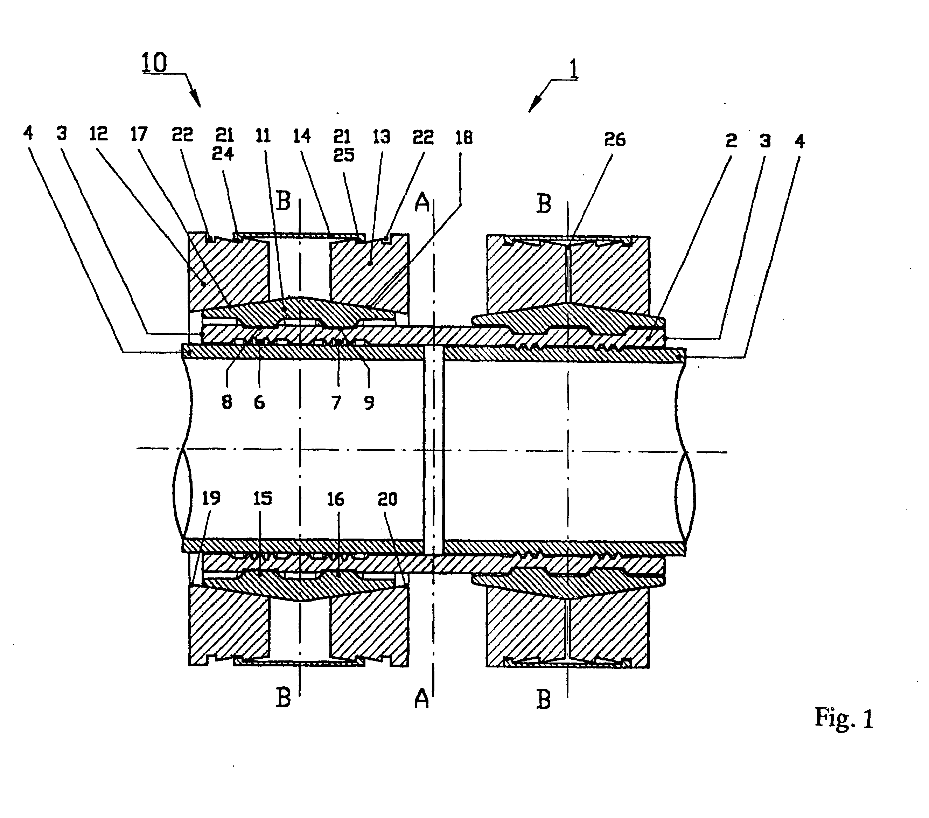

Fig. 1 zeigt einen Längsschnitt durch eine beidseitig ausgeführte erfindungsgemäße Rohrkupplung 1, wobei links der Symmetrieachse A - A eine vorverpreßte und rechts der Symmetrieachse A - A eine verpreßte Hälfte der Rohrkupplung 1 dargestellt ist

Die Rohrkupplung 1 besteht aus einer hohlzylinderförmigen Kupplungshülse 2 mit axial gegenüberliegenden Eintrittsenden 3, in die die Enden der zu verbindenden Rohre 4 eingeschoben werden. Bezogen auf die Achse A - A ist die Rohrkupplung 1 symmetrisch aufgebaut, daß heißt, die nachfolgend beschriebenen Kupplungselemente und Wirkungsbeziehungen beziehen sich immer auf eine Hälfte der Kupplungshülse 2. Im vorliegenden Ausführungsbeispiel, bei dem zwei Rohre 4 mit gleichem Durchmesser druckdicht miteinander verbunden werden sollen, ist die konstruktive Ausbildung der Kupplungselemente auf der einen Hälfte der Kupplungshülse 2 mit der der anderen Hälfte zur Achse A - A symmetrisch. Im vorliegenden Fall werden daher Aufbau und Wirkungsweise der Rohrkupplung 1 nur auf einer Seite beschrieben.

Die Kupplungshülse 2 wird im allgemeinen aus einem Werkstoff gefertigt, der mit dem Werkstoff der Rohre 4 identisch ist.

Die Kupplungshülse 2 ist ein Hohlzylinder, dessen Wandstärke über die Länge der Kupplungshülse 2 im wesentlichen konstant bleibt und im Verhältnis zum Außendurchmesser des Rohres 4 und dessen Wandstärke steht.

Die Innenseite der Kupplungshülse 2 weist radial umlaufende Verzahnungen auf, wobei eine Verzahnung 6 in der Nähe des Eintrittsendes 3 der Kupplungshülse 2 und die zweite Verzahnung 7 zur ersten Verzahnung 6 in Richtung der Achse A - A beabstandet angeordnet ist. Die Verzahnung 6, 7 besteht im vorliegenden Ausführungsbeispiel aus drei nebeneinander liegenden Zähnen, die gegenüber dem Innendurchmesser der Kupplungshülse 2 in der Weise zurückgesetzt sind, daß der im Bereich der Zahnspitzen gemessene Durchmesser gleich oder größer dem Innendurchmesser der Kupplungshülse 2 ist. Dadurch wird vermieden, daß beim Einschieben des Rohres 4 in den Innenraum der Kupplungshülse 2 die Zahnspitzen beschädigt werden.

Die Zahnspitzen der Verzahnungen 6, 7 können je nach Anwendungsfall unterschiedlich ausgebildet sein. So ist es denkbar, die Zahnspitze abzuflachen oder abzurunden, um damit Einfluß auf das Eindringverhalten der Verzahnung 6, 7 in die Oberfläche des Rohres 4 zu nehmen.

Auf der Außenseite der Kupplungshülse 2 befinden sich Fixierungsmerkmale, die sich als radial umlaufende, den jeweiligen Verzahnungen 6, 7 gegenüberliegende flache Nuten 8, 9 darstellen. Auf die Funktion dieser Nuten 8, 9 wird in einem späteren Zusammenhang eingegangen.

In einem speziellen Anwendungsfall kann die Kupplungshülse 2 im Bereich der Symmetrieachse A - A, also in dem Bereich, in dem sich die Enden der Rohre 4 in Kupplungsposition gegenüberliegend befinden, mit einer inneren, abgesetzten Verengung ausgeführt sein, die ein Begrenzen der Einstecktiefe des eingeführten Rohres 4 bewirkt. Ist die Kupplungshülse 2, wie im vorliegenden Ausführungsbeispiel innen nicht verengt, so ist sie als Schiebehülse einsetzbar.

Auf der Kupplungshülse 2 befindet sich ein dazu koaxial angeordneter Preßsatz 10, der aus dem Druckring 11, zwei Preßringen 12, 13 und gegebenenfalls einer Abdeckhülse 14 besteht.

Der Druckring 11 ist ein rotationssymmetrischer Hohlzylinder, der auf der Innenseite Fixierungsmerkmale zur Befestigung auf der Kupplungshülse 2 aufweist. Diese Fixierungsmerkmale stellen sich als radial umlaufende Vorsprünge 15, 16 dar, die so ausgeführt sind, daß sie mit den Nuten 8, 9 auf der Außenseite der Kupplungshülse 2 korrespondieren. Durch die jeweilige Paarung Nut 8, 9/Vorsprung 15, 16 wird die axiale Position des Druckringes 11 auf der Kupplungshülse 2 definiert. Die Durchmesser des Nutgrundes einerseits und des Vorsprunges andererseits werden so gewählt, daß zwischen beiden Bauteilen ein über eine Spielpassung realisierter vorverpreßter Zustand erreicht wird, der eine Montage der Rohrkupplung 1 erleichtert.

Auf der Oberseite des Druckringes 11 befinden sich von den Enden des Druckringes 11 ausgehende kegelförmige Erweiterungen 17,18, die bis zur Symmetrieachse B-B kontinuierlich und ebenförmig ansteigen.

Jeder kegelförmigen Erweiterung 17, 18 des Druckringes 11 ist ein Preßring 12, 13 zugeordnet. Die Preßringe 12, 13 stellen sich als rotationssymmetrische Hohlzylinder dar, die an ihrer Innenseite eine zur Symmetrieachse B - B gerichtete kegelförmige Erweiterung 19, 20 aufweisen. Diese kegelförmige Erweiterung 19, 20 des Preßringes 12, 13 korrespondiert mit der zugehörigen kegelförmigen Erweiterung 17, 18 des Druckringes 11, indem sich beide Bauteile auf den kegelförmigen Flächen berühren.

Im vorverpreßten Zustand der Rohrkupplung 1 sind die Preßringe 12, 13 auf die jeweilige Erweiterung 17, 18 des Druckringes 11 soweit aufgeschoben, daß zwischen den einander gegenüberstehen Preßringen 12,13 ein ausreichender Anstand besteht, der so bemessen ist, daß in der Ausführung des Preßvorganges eine axiale Bewegung der Preßringe 12, 13 zueinander gestattet wird.

Die Oberseite jedes Preßringes 12, 13 weist ein Paar von radial umlaufenden beabstandeten Nuten 21, 22 auf, die eine als Rückhalteelement wirkende Abdeckhülse 14 aufnehmen. Die Abdeckhülse 14 weist an ihren Rändern nach innen gerichtete Kanten 24, 25 auf, die mit den umlaufenden Nuten 21, 22 in Eingriff gebracht werden. Dabei befinden sich die Kanten 24, 25 im vorverpreßten Zustand der Rohrkupplung 1 mit der jeweils der Symmetrieachse B - B nächstliegenden Nut 21 in Eingriff, während der Eingriff der Kanten 24, 25 im verpreßten Zustand der Rohrverbindung 1 auf die daneben liegenden Nuten 22 übergeht. Um diesen Übergang während der axialen Bewegung der Preßringe 12, 13 zueinander zu erleichtern, weisen sowohl die Kanten 24, 25 als auch die Nuten 21, 22 Auslaufschrägen auf.

Die Abdeckhülse 14 erfüllt bei der vorverpreßten Rohrverbindung 1 die Funktion, die einzelnen Elemente des Preßsatzes 10 in einem montagefähigen Zustand zusammenzuhalten.

Bei der verpreßten Rohrverbindung 1 besteht die Aufgabe der Abdeckhülse 14 darin, einem unbeabsichtigten Lösen beider Preßringe 12, 13 entgegenzuwirken und darüber hinaus eine Verschmutzung des zwischen den Preßringen 12, 13 befindlichen Zwischenraumes 26 zu vermeiden.

Nachstehend wird der Vorgang der Herstellung der druckdichten Rohrkupplung 1 beschrieben. Auf die Kupplungshülse 2 wird ein Preßsatz 10, bestehend aus dem Druckring 11, einem Paar Preßringe 12, 13 und der Abdeckhülse 14 geschoben. Dabei rasten die nach innen gerichteten Vorsprünge 15, 16 des Druckringes 11 in die entsprechenden an der Außenseite der Kupplungshülse 2 befindlichen Nuten 21, 22 ein und definieren damit die Lage des Preßsatzes 10 auf der Kupplungshülse 2. Diese Baugruppe kann je nach der Nennweite der zu verbindenden Rohre 4 vorgefertigt und zum Montageort angeliefert werden. Am Montageort werden die Enden der zu verbindenden Rohre 4 mit einer vorgegebenen Länge in die Kupplungshülse 2 eingeführt. Mittels geeigneter, an sich bekannter und deshalb nicht beschriebener Werkzeuge werden die zu einem Paar zugehörigen Preßringe 12, 13 axial gegeneinander verschoben. Dabei gleiten die Preßringe 12,13 über die kegelförmigen Flächen zwischen Preßring 12, 13 und Druckring 11 und verdrängen den Werkstoff des Druckringes 11 in radialer Richtung. Die Verdrängung erfolgt in erster Linie über die Vorsprünge 15, 16 des Druckringes 11 und wird auf die den Nuten 8, 9 gegenüberliegenden Verzahnungen 6, 7 übertragen. Die Verzahnungen 6, 7 werden in radialer Richtung in die Oberfläche der eingeführten Rohre 4 gedrängt und gewährleisten auf diese Weise eine druckdichte Verbindung zwischen Kupplungshülse 2 und Rohr 4.

Über den Winkel der kegelförmigen Erweiterungen der Preßringe 12, 13 und des Druckringes 11, sowie dem bei dem axialen Zusammenschieben zurückgelegten Weg kann man die aufzubringende Axialkraft und die Eindringtiefe sowie Haltekraft der umlaufenden Verzahnung 6, 7 der Kupplungshülse 2 in dem zu verbindenden Rohr 4 beeinflussen.

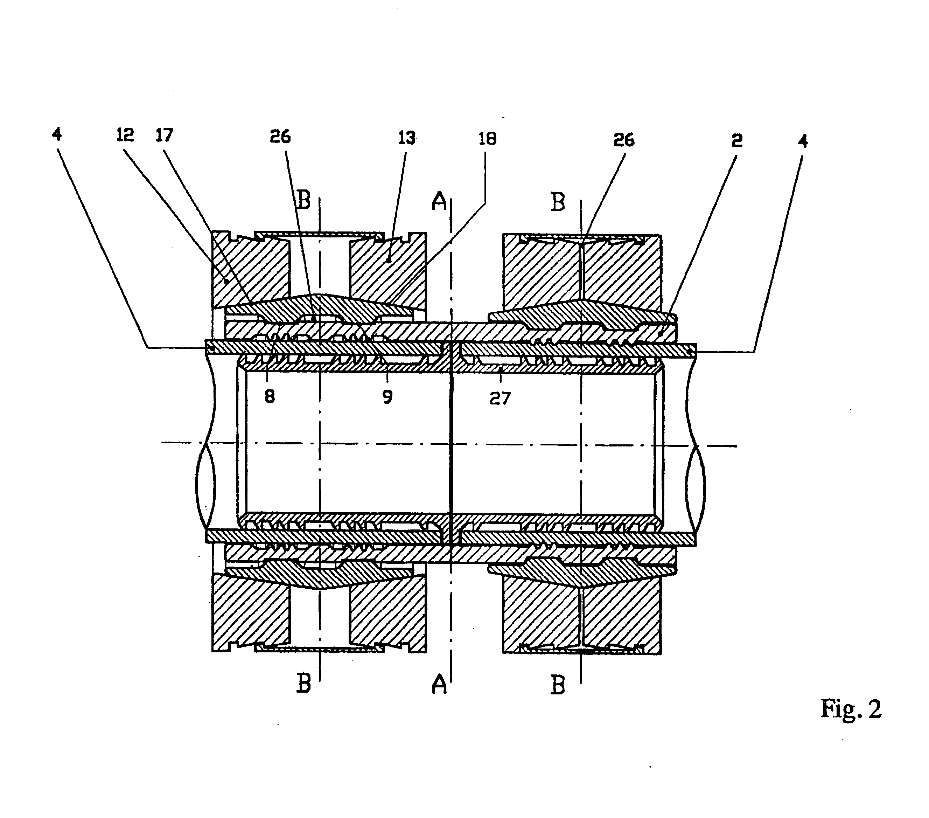

In Fig. 2 ist die gleiche, wie in Fig. 1 beschriebene Rohrverbindung 1 dargestellt. Der Unterschied dazu besteht darin, daß in das Rohr 4 eine Stützhülse 27 eingesetzt ist, die dem Rohr 4 im Bereich der Verdrängung einen das Eindringen der Verzahnung 6, 7 in die Oberfläche des Rohres 4 unterstützenden Widerstand gibt. Die Stützhülse 27 weist an ihrer Außenfläche radial umlaufende Erhebungen auf, die beim Einsetzen der Stützhülse 27 in das Rohr 4 dessen Toleranzen ausgleichen.

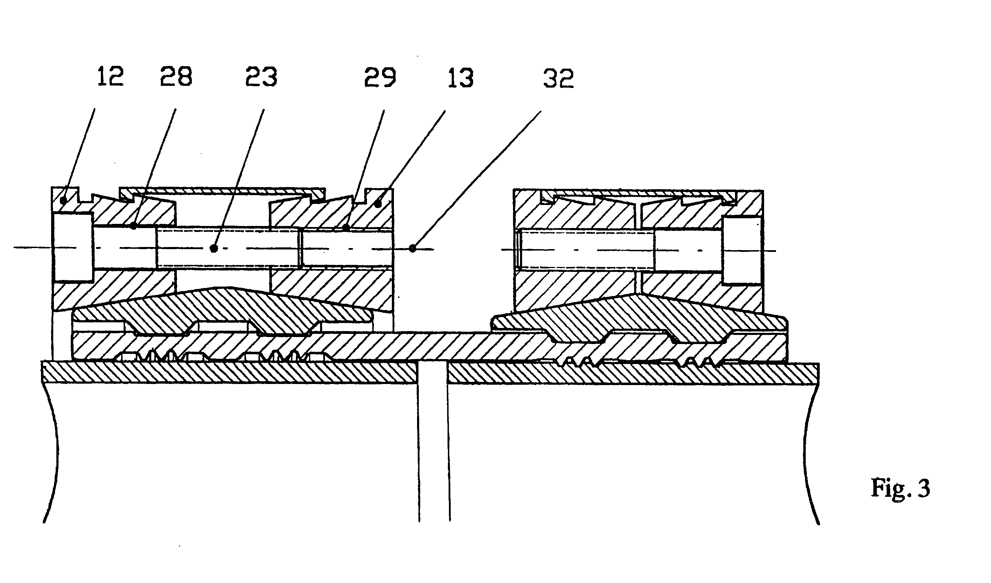

In Fig. 3 wird das Aufbringen der axialen Verschiebekraft auf die Preßringe 12, 13 mittels Schrauben 23 dargestellt. Die Preßringe 12, 13 weisen auf einem Teilkreis 32 axial angeordnete Bohrungen auf, wobei die im Preßring 12 befindliche Bohrung als Durchgangsbohrung 28 und die axial im Preßring 13 gegenüberliegende Bohrung als Gewindebohrung 29 ausgebildet ist. Durch das gleichmäßige Anziehen der Schrauben 23 werden die Preßringe 12, 13 gegeneinander auf den kegelförmigen Flächen verschoben.

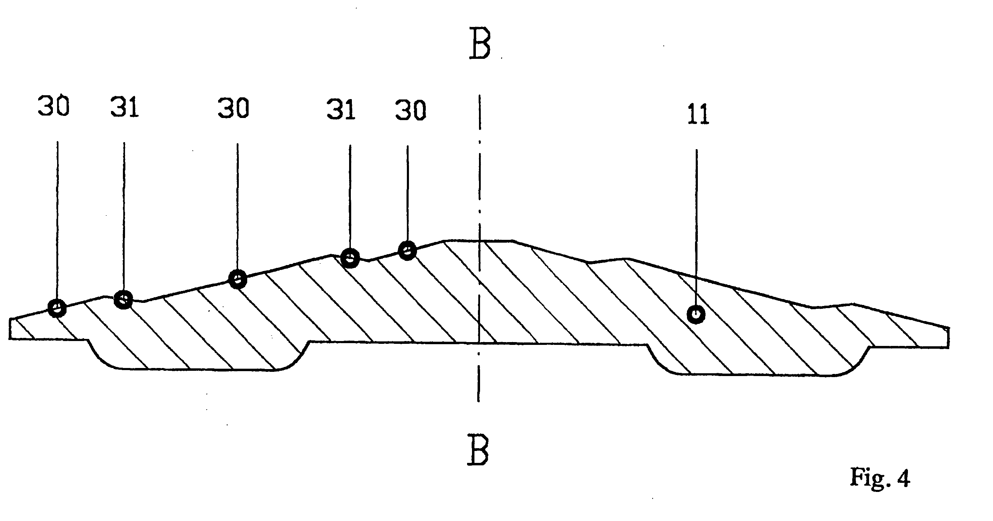

Wie in Fig. 4 dargestellt ist, kann die Oberseite des Druckringes 11 bis zur Symmetrieachse B - B stufenförmig ausgeführt sein, wobei einem kegelförmig ansteigenden, ebenförmigen ausgebildeten Abschnitt 30 ein hinterschnittener Abschnitt 31 folgt, der als kegelförmige Verengung ausgeführt ist. Diese Folge wiederholt sich bis zur Symmetrieachse B-B vorzugsweise vier mal. Diese hinterschnittenen Abschnitte 31 verhindern bei komplementärer Ausbildung der Innenseite der Preßringe 12,13 ein gegenseitiges Abgleiten im vor- bzw. fertigverpreßten Zustand.

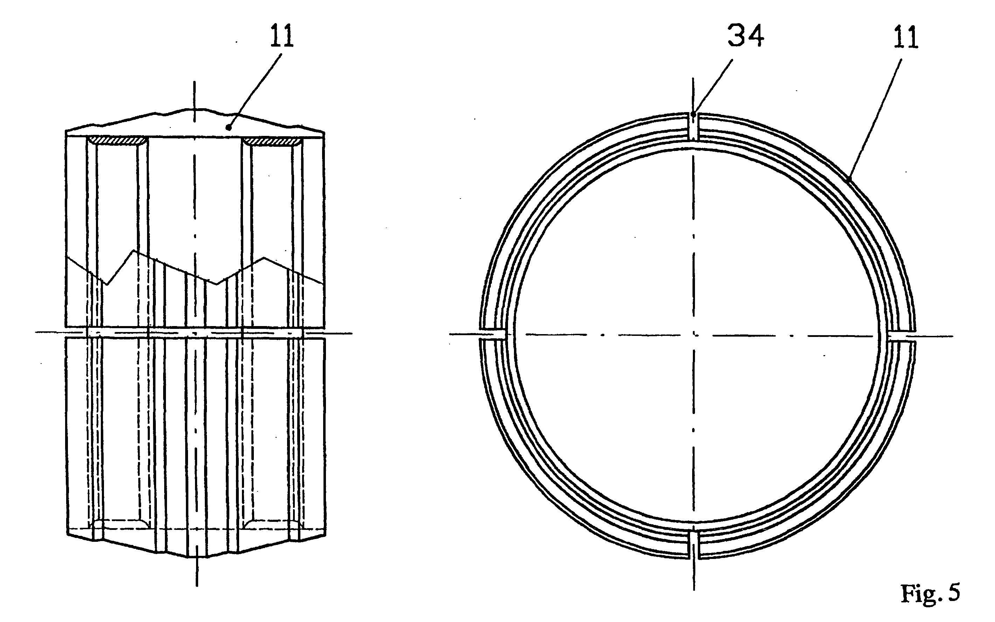

In Fig. 5 ist der Druckring 11 in teilsegmentierter Ausführung dargestellt. Der Körper des Druckringes 11 ist, bis auf die radial umlaufenden Vorsprünge 15 und 16, geschlitzt. Dadurch werden die erforderlichen axialen Preßkräfte bei gleichbleibenden Eigenschaften des Preßsatzes 10 und der radialen Verdrängung minimiert. Die Anzahl und die Breite der Schlitze 34 stehen in direktem Zusammenhang mit der radialen Verkürzung des Druckringes 11.

In einer abgewandelten Form kann der Druckring 11 auch aus einzelnen, bogenförmigen Segmenten bestehen.

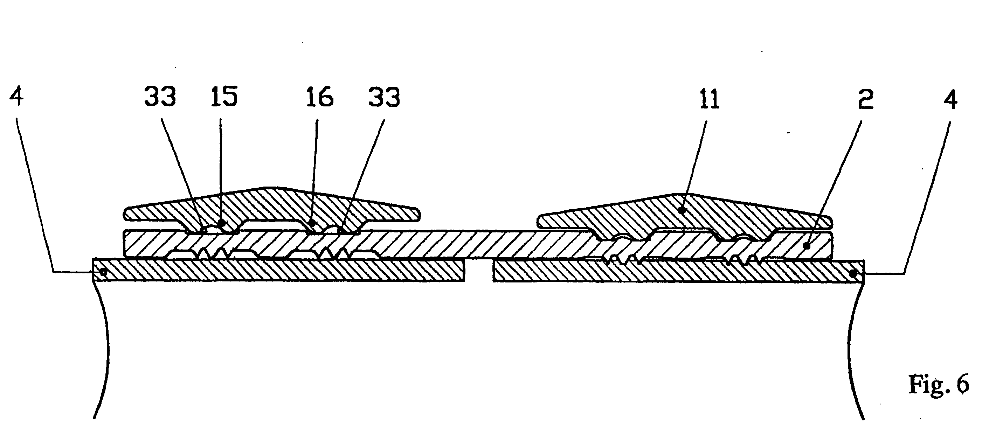

Die in Fig. 6 gezeigte Form des Fixierungbereiches zwischen dem Druckring 11 und der Kupplungshülse 2 können weiter modifiziert werden. So ist es beispielsweise möglich, den Fixierungsbereich auf der Kupplungshülse 2 umlaufend auszuführen. Die umlaufenden Ringnuten 33 dienen als Ausgleichbereich für zu stark werdende Spannungen in den Bauteilen der Kupplung, die beim Verpressen von Rohren mit großem Toleranzbereich auftreten, wenn die Rohraußendurchmessertoleranz im oberen Grenzbereich liegt.

Die in den Ausführungsbeispielen gezeigten Formen der Unterseite des Druckringes 11 können weiter modifiziert werden, ohne daß damit vom Schutzumfang des Patents abgewichen wird.

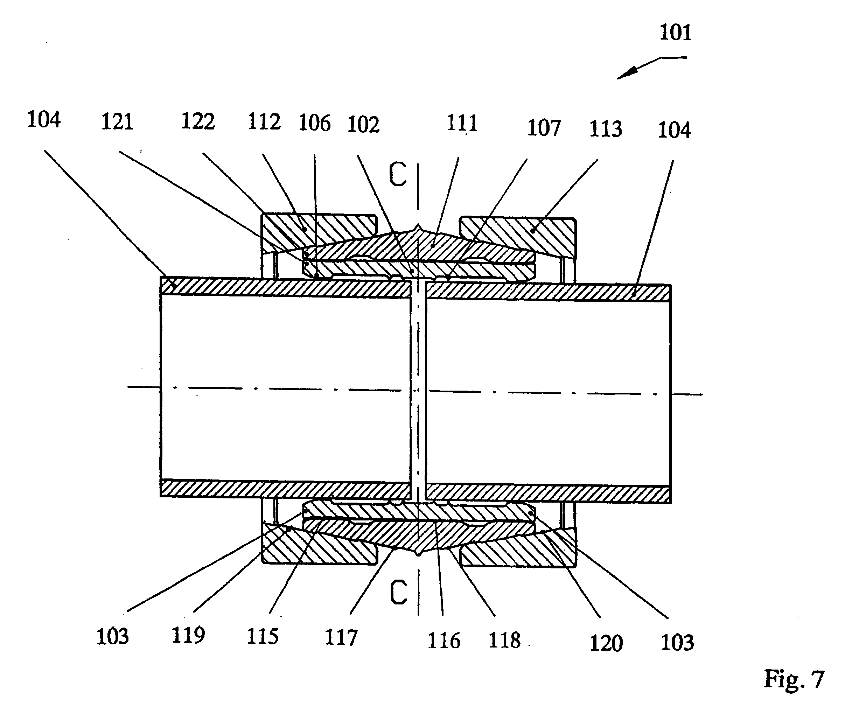

Die Rohrkupplung wird in einer weiteren Ausführungsform beschrieben. Die Rohrkupplung 101 besteht gemäß Fig. 7 aus einer hohlzylinderförmigen Kupplungshülse 102 mit axial gegenüberliegenden Eintrittsenden 103, in die die Enden der zu verbindenden Rohre 104 bis zur Symmetrieachse C - C eingeschoben werden.

Die Innenseite der Kupplungshülse 102 weist radial umlaufende Verzahnungen auf, wobei eine Verzahnung 106 in der Nähe des Eintrittsendes 103 der Kupplungshülse 102 und die zweite Verzahnung 107 zur ersten Verzahnung 106 in Richtung der Achse C- C beabstandet in der Nähe des eingeschobenen Rohrendes angeordnet ist. Die Enden der Rohre 104 werden in der Kupplungshülse 102 demnach so positioniert, daß jedem Rohrende sowohl eine Verzahnung 106 als auch eine Verzahnung 107 zugeordnet ist.

Auf der Kupplungshülse 102 befindet sich ein dazu koaxial angeordneter Preßsatz 110, der aus dem Druckring 111, zwei Preßringen 112,113 besteht.

Der Druckring 111 ist ein zur Kupplungshülse 102 im wesentlichen längengleicher rotationssymmetrischer Hohlzylinder. Druckring 111 und Kupplungshülse 102 weisen an ihren Enden axial wirkende Fixierungsmerkmale auf, die sich an der Kupplungshülse 102 als flache umlaufende Wulst 121 und am Druckring 111 als mit der Wulst 121 korrespondierende flache Nut 122 darstellt. Diese Fixierungsmerkmale definieren die axiale Position des Druckringes 111 auf der Kupplungshülse 102 und gewährleisten im vorverpreßten Zustand eine formschlüssige Verbindung zwischen Kupplungshülse einerseits und Druckring andererseits. Durch diesen Zusammenhalt der einzelnen Elemente der Baugruppe wird ein hoher Vorfertigungsgrad der Rohrkupplung erreicht.

Auf der Oberseite des Druckringes 111 befinden sich von den Enden des Druckringes 111 ausgehende kegelförmige Erweiterungen 117, 118, die bis zur Symmetrieachse C - C kontinuierlich und ebenförmig ansteigen.

Jeder kegelförmigen Erweiterung 117, 118 des Druckringes 111 ist ein PreBring 112, 113 zugeordnet. Die Preßringe 112, 113 stellen sich als rotationssymmetrische Hohlzylinder dar, die an ihrer Innenseite eine zur Symmetrieachse C - C gerichtete kegelförmige Erweiterung 119, 120 aufweisen. Diese kegelförmigen Erweiterungen 119, 120 der Preßringe 112, 113 korrespondieren mit den zugehörigen kegelförmigen Erweiterungen 117,118 des Druckringes 111, indem sich beide Bauteile auf den kegelförmigen Flächen berühren.

Im vorverpreßten Zustand der Rohrkupplung 101 sind die Preßringe 112, 113 auf die jeweilige Erweiterung 117,118 des Druckringes 111 soweit aufgeschoben, daß zwischen den einander gegenüberstehen Preßringen 112,113 ein ausreichender Anstand besteht, der so bemessen ist, daß in der Ausführung des Preßvorganges eine axiale Bewegung der Preßringe 112, 113 zueinander gestattet wird.

Nachstehend wird der Vorgang der Herstellung der druckdichten Rohrkupplung 101 beschrieben. Auf die Kupplungshülse 102 wird ein Preßsatz, bestehend aus dem Druckring 111 und einem Paar Preßringe 112,113 geschoben. Diese Baugruppe kann je nach der Nennweite der zu verbindenden Rohre 104 vorgefertigt und zum Montageort angeliefert werden. Am Montageort werden die Enden der zu verbindenden Rohre 104 mit einer vorgegebenen Länge in die Kupplungshülse 102 bis zur Symmetrieachse C - C eingeführt. Mittels geeigneter, an sich bekannter und deshalb nicht beschriebener Werkzeuge werden die zu einem Paar zugehörigen Preßringe 112, 113 axial gegeneinander verschoben. Dabei gleiten die Preßringe 112, 113 über die kegelförmigen Flächen zwischen Preßring 112, 113 und Druckring 111 und verdrängen den Werkstoff des Druckringes 111 in radialer Richtung. Die Verdrängung erfolgt in erster Linie über die Vorsprünge 115, 116 des Druckringes 111 und wird auf die den Vorsprüngen 115, 116 gegenüberliegenden Verzahnungen 106, 107 übertragen. Die Verzahnungen 106, 107 werden in radialer Richtung in die Oberfläche der eingeführten Rohre 104 gedrängt und gewährleisten auf diese Weise eine druckdichte Verbindung zwischen Kupplungshülse 102 und Rohr 104.

Auch in dieser besonderen Ausführungsform sind die kegelförmigen Erweiterungen 117,118 des Druckringes 111 stufenförmig ausgebildet. Das bedeutet, daß, ausgehend vom Ende des Druckringes 111, einem größeren Bereich der kegelförmigen Erweiterung eine kegelförmige Verengung geringeren Ausmaßes folgt. Diese stufenförmige Ausbildung wiederholt sich bis zur Symmetrieachse über die gesamte kegelförmige Erweiterung 117, 118. Entsprechend sind die kegelförmigen Erweiterungen 119, 120, der Preßringe 112, 113 komplementär ausgebildet.

Die funktionellen Auswirkungen dieser stufenförmigen Ausbildung der sich gegenüberliegenden Flächen sind in zweifacher Hinsicht von Bedeutung. Im vorverpreßten Zustand gewährleistet der formschlüssige Eingriff zwischen dem Druckring 111 einerseits und den Preßringen 112, 113 andererseits einen Zusammenhalt der einzelnen Elemente der Baugruppe und damit einen hohen Vorfertigungsgrad der Rohrkupplung. Im verpreßten Zustand gewährleistet die gleiche Ausbildung, daß ein Zurückgleiten der Preßringe von dem Druckring vermieden wird. Damit wird die Sicherheit der Rohrverbindung bei unterschiedlichsten Belastungen erhöht.

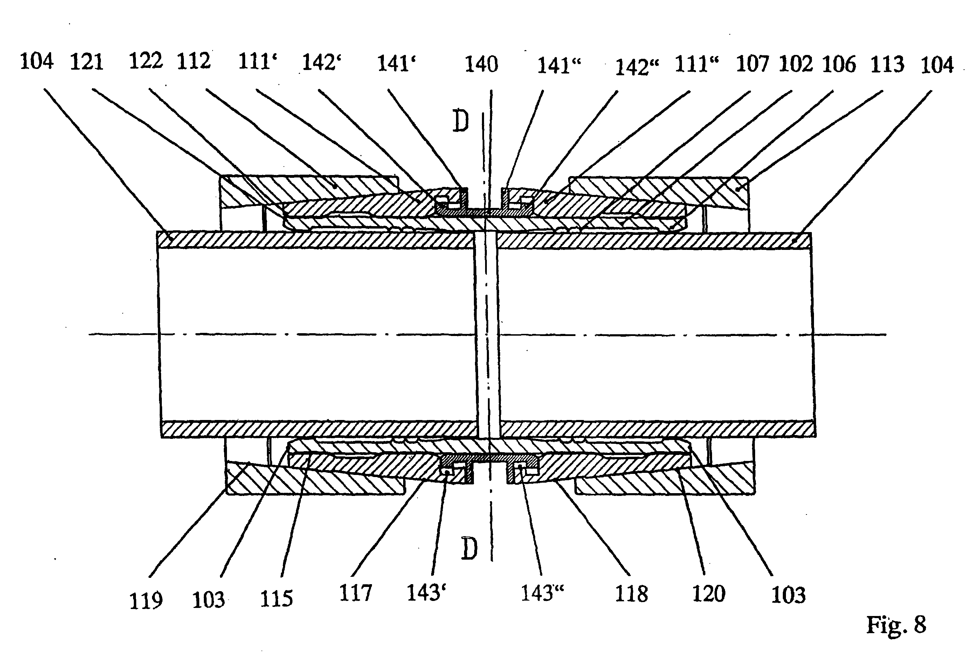

In einer gemäß Fig. 8 ausgebildeten Ausführungsform wird der Druckring 111 in seiner radiale Symmetrieachse D - D in die Druckringabschnitte 111' und 111" geteilt. Beide Druckringabschnitte 111' und 111" werden durch einen axialen Zwischenring 140 miteinander gekuppelt. Dabei weist der Zwischenring 140 den gleichen Innendurchmesser wie die Druckringabschnitte 111' und 111" auf, um die aus den Druckringabschnitten 111' und 111" und dem Zwischenring 140 gebildete Druckringeinheit über die Kupplungshülse 102 gleicher Länge zu schieben.

Der Zwischenring 140 weist an seiner Außenseite zwei beabstandete umlaufende Flansche 141', 141" auf, die als Anschlag für die zur Symmetrieachse D - D gerichtete Stirnseite des jeweiligen Druckringabschnittes 111', 111" dient. Der Zwischenring 140 weist darüber hinaus jeweils einen von dem Flansch 141', 141" nach außen gerichteten Bereich auf, der in einem radial nach außen weisenden Rand 142', 142" endet. Das dem Rand 142', 142" zugeordnete Ende des Druckringabschnittes 111', 111" weist einen Bereich mit einem gegenüber dem Innendurchmesser vergrößerten Durchmesser auf, in dem eine Nut 143', 143" eingearbeitet ist, die mit dem Rand 142', 142" in Eingriff gebracht wird. Dieser Eingriff gewährleistet einen Vormontagezustand der beiden Druckringabschnitte 111', 111".

Der zwischen den Flanschen 141', 141" befindliche Raum dient der Aufnahme eines nicht dargestellten Preßwerkzeuges, wobei sich das Preßwerkzeug am Flansch einerseits und an der nach außen gerichteten Stirnfläche des dazugehörigen Preßringes abstützt. Der Vorteil dieser Ausführung liegt in der Verringerung des Preßweges und damit der weitgehenden Minimierung des Preßwerkzeuges.

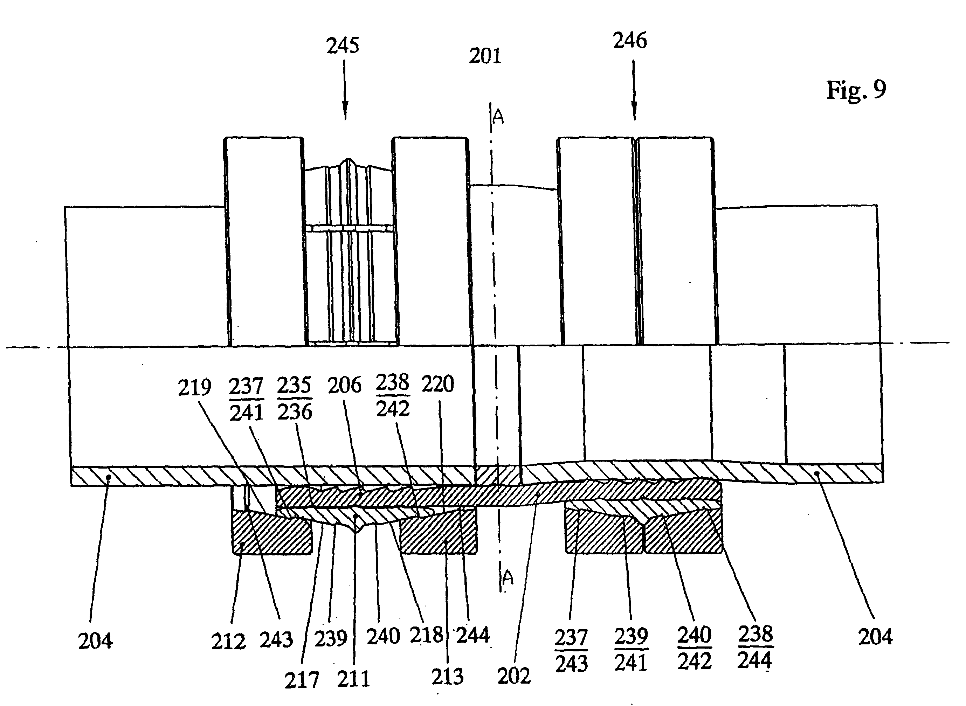

Die Erfindung wird anhand eines weiteren Ausführungsbeispiels beschrieben. In diesem Beispiel dient die Vorrichtung der druckdichten Verbindung zweier sich fluchtend gegenüberstehender Rohrenden gleicher Nennweite. Die gemäß Fig. 9 ausgeführte Rohrkupplung 201 beschränkt sich auf die eine Seite der Vorrichtung, da sie zur Achse A - A symmetrisch aufgebaut ist.

Das Rohrende 204 wird von einer Seite in die hohlzylinderförmige Kupplungshülse 202 bis etwa zu deren Mitte eingeschoben. Der Innenbereich der Kupplungshülse 202 ist in dem Abschnitt, der das Rohrende 204 aufnimmt, mit einer Mehrzahl untereinander beabstandeter, gegenüber dem Innendurchmesser der Kupplungshülse 202 zurückgesetzter, radial umlaufender Zähne 206 versehen, die gegen die Oberfläche des Rohrendes 204 gerichtet sind.

Über diesen Abschnitt der Kupplungshülse 202 wird ein Druckring 211 geschoben, dessen Innendurchmesser geringfügig größer als der Außendurchmesser der Kupplungshülse 202 ist. An seiner Außenseite weist der Druckring 211 eine von jedem Ende ausgehende und zur Mitte des Druckringes 211 ansteigende kegelförmige Erweiterung 217, 218 auf.

Dem Druckring 211 ist auf jeder Seite konzentrisch ein Preßring 212, 213 zugeordnet. Jeder Preßring 212, 213 ist an seiner Innenseite mit einer kegelförmigen Erweiterung 219, 220 ausgebildet, die den kegelförmigen Erweiterungen 217, 218 entsprechen. In der unverpreßten Position der Vorrichtung, die durch das Bezugszeichen 245 gekennzeichnet wird, sind die Preßringe 212, 213 über den jeweiligen Endbereich des Druckringes 211 geschoben, wobei die kegelförmigen Erweiterungen (217/219, 218/220) in diesen Bereichen aneinander liegen.

Aus dieser Position 245 heraus werden die Preßringe 212, 213 mittels eines nicht dargestellten Werkzeuges gegeneinander über die kegelförmigen Erweiterungen in die verpreßte Position der Vorrichtung, wie bei 246 dargestellt, verschoben. Dabei wird der Druckring 211 radial in die Kupplungshülse 202 gedrängt, was wiederum ein radiales Verdrängen der Zähne 206 in die Oberfläche des Rohrendes 204 nach sich zieht. Auf diese Weise entsteht eine druckdichte, unlösbare Rohrkupplung.

Ein wesentliches Merkmal der Erfindung besteht darin, die einzelnen Elemente der Rohrkupplung, wie Kupplungshülse 202, Druckring 211 und Preßringe 212, 213 vorzumontieren, um sie als eine kompakte Baugruppe am Montageort bereitzustellen. Dazu ist es notwendig, die einzelnen Elemente mit Mitteln auszustatten, die eine definierte Positionierung der einzelnen Elemente untereinander ermöglichen.

Aus diesem Grund ist die Kupplungshülse 202 an der Außenseite des Abschnitts, der das Rohrende 204 aufnimmt, mit radial umlaufenden Rillen 235 ausgebildet. Der Druckring 211 weist an seiner Innenseite radial umlaufende, mit den Rillen 235 korrespondierende, als Wülste ausgebildete Fixierungsmerkmale 236 auf. Die Toleranz zwischen den beiden Elementen ist so ausgebildet, daß beim Aufschieben des Druckringes 212 auf die Kupplungshülse 202 mittels Handkraft die Wülste 236 in die Rillen 235 einrasten und die Position der beiden Elemente im vorverpreßten Zustand untereinander fixieren.

In ähnlicher Weise sind der Druckring 211 an seiner Außenseite und die Preßringe 212, 213 an ihrer Innenseite mit entsprechenden Mitteln zu Positionierung untereinander ausgestattet.

Der Druckring 211 ist an seiner kegelförmigen Erweiterung 217, 218 jeweils in der Nähe seines Endes mit einem Fixierungsmerkmal 237, 238 und in der Nähe seiner Mitte mit einem weiteren Fixierungsmerkmal 239, 240 ausgestattet, und der entsprechende Preßring 212, 213 ist an seiner an der Innenseite ausgebildeten kegelförmigen Erweiterung 219, 220 an seinem dem Druckring 211 zugewandten Ende mit einem Fixierungsmerkrnal 241, 242 und an seinem dem Druckring 211 abgewandten Ende mit einem weiteren Fixierungsmerkmal 243, 244 versehen.

Die Fixierungsmerkmale korrespondieren je nach dem Zustand der Rohrkupplung 201 in unterschiedlicher Weise miteinander. Im unverpreßten Zustand der Rohrkupplung 201 korrespondieren die auf dem Druckring 211 ausgebildeten Fixierungsmerkmalen 237, 238 mit den Fixierungsmerkmalen 241, 242 der Preßringe 212, 213. Dadurch werden alle Elemente der Rohrkupplung 201 werkseitig zu einer Baueinheit zusammengefügt, die in dieser Kompaktheit am Montageort bereitgestellt werden kann.

Beim Verpressen der Rohrkupplung 201 wird der Eingriff der zwischen dem Druckring 211 und den Preßringen 212, 213 wirkenden Fixierungsmerkmalen in der Weise verändert, daß die Fixierungsmerkmale 239 und 240 des Druckringes 211 mit den Fixierungsmerkmalen 241, 242 des Preßringes 212, 213 einerseits und die Fixierungsmerkmale 237 und 238 des Druckringes 211 mit den Fixierungsmerkmalen 243, 244 des Preßringes 212, 213 andererseits in Wirkbeziehung gelangen. Auf diese Weise wird verhindert, daß die Preßringe 212, 213 nach dem Verpressen über die kegelförmigen Ausbildungen zurückgleiten und damit die Standfestigkeit der Rohrkupplung 201 gefährden.

Ein weiteres Merkmal der Erfindung ist die Ausführung des Druckringes 211. Der Druckring 211 besteht in seinem Querschnitt aus einzelnen, untereinander beabstandeten Segmenten, die die Kupplungshülse 202 gleichmäßig umgeben. Dazu wird der Druckring 211 an seinem Umfang über seine gesamte Wandstärke in axialer Richtung geschlitzt, wobei vorzugsweise zwisehen den benachbarten Segmente Stege stehen bleiben, die die Form des Druckringes 211 erhalten. Der Vorteil dieser Ausführung besteht darin, daß beim Verpressen der Rohrkupplung 201 die Verformungsarbeit zwischen dem Druckring 211 und den Preßringen 212, 213 minimiert wird, da die beabsichtigte und notwendige Verringerung des Durchmessers des Druckringes 211 zunächst über das Schließen der Schlitze zwischen benachbarten Segmenten, und nicht über eine Deformation des Druckringes 211 realisiert wird. Die Durchmesserverringerung des Druckringes 211 durch das Verschieben der Preßringe 212, 213 gegeneinander überträgt sich auf den Abschnitt der Kupplungshülse 202, der das Rohrende 204 aufgenommen hat, wobei die Zähne 206 in die Oberfläche des Rohrendes 204 gedrängt werden und damit eine druckdichte Rohrkupplung 201 gewährleisten.

Eine weitere Möglichkeit, die einzelnen Segmente des Druckringes 211 untereinander definiert zu beabstanden, besteht darin, zwischen den Segmenten eine elastische Distanzmasse einzulagern, die eine gleichmäßige Verteilung der Segmente auf den Umfang des Druckringes 211 sichert. Beim Verpressen der Rohrkupplung wird die Distanzmasse zwischen den benachbarten Segmenten herausgedrückt.

Die Erfindung schafft eine Rohrverbindung die höchste Universalität bezüglich der Anforderungen an die Güte der zu verbindenden Rohre gewährleistet. Sie hat ein berechenbares Verhalten und ist in der Lage hochdruckdichte Rohrkupplungen selbst bei großen Rohraußendurchmessertoleranzen zu gewährleisten.

Die erfindungsgemäße Lösung minimiert die für das axiale Aufpressen der Preßringe auf den Druckring und damit auf die Kupplungshülse erforderlichen Kräfte.

Sie zeichnet sich durch hohe Stabilität gegenüber Schwingungen, axialen Zugkräften auf das Rohr und extremen Temperaturschwankungen aus.

Die Rohrkupplung besteht aus einfach herzustellenden, rotationssymmetrischen Einzelteilen, die hinsichtlich der funktionsbedingten Auswahl der eingesetzten Werkstoffe mit ihren spezifischen Eigenschaften optimale Zusammenstellungen hinsichtlich der angestrebten Eigenschaften der Rohrkupplung ermöglichen.

Die erfindungsgemäße Lösung ermöglicht eine Standardisierung der Preßsatzausführung.

Ein und dieselbe Preßsatzausführung kann in Verbindung mit verschiedenen Kupplungshülsenmaterialien bzw. Ausführungsformen eingesetzt werden. So ist es auch möglich nur durch konstruktive Anpassung der Kupplungshülse, in bestimmten Grenzen, verschiedene Rohraußendurchmesser zu verpressen.

Obwohl die vorliegende Erfindung anhand einiger bevorzugter Ausführungsbeispiele beschrieben wurde, die die Verbindung zweier Rohrenden zeigen, ist es für den Fachkundigen ohne weiteres ersichtlich, daß verschiedene Modifizierungen und Änderungen vorgenommen werden können, ohne vom Schutzumfang der nachfolgenden Patentansprüche abzuweichen. So ist es ersichtlich, daß nur auf einer Seite auf die erfindungsgemäß ausgeführte Preßverbindung zurückgegriffen wird, die andere Seite jedoch mit herkömmlichen Verbindungselementen, wie z.B., Verschraubungen oder Flansche, ausgestattet ist, was lediglich eine spezielle Anwendungsform der Erfindung darstellt.

## Patentansprüche

1. Vorrichtung zur Herstellung einer druckdichten Rohrkupplung mit mindestens einem Rohrende, bestehend aus einem hülsenförmigen, rotationssymmetrischen Grundkörper, wobei der Grundkörper mindestens einen im wesentlichen zylindrischen, mit Zahnmitteln ausgestatteten Innenraum zur Aufnahme des Rohrendes aufweist, und die Zahnmittel mittels über auf die Außenfläche des Grundkörpers wirkende Pressmittel radial in die Oberfläche des von dem Innenraum aufgenommenen Rohrendes verdrängbar sind, **dadurch gekennzeichnet, daß**
der Grundkörper aus einer hohlzylinderförmigen Kupplungshülse (2) mit im wesentlichen gleichbleibender Wanddicke besteht, wobei an der Innenseite der Kupplungshülse (2) mindestens zwei untereinander beabstandete, gegenüber dem Innendurchmesser der Kupplungshülse (2) zurückgesetzte, radial umlaufende Verzahnungen (6, 7) angeordnet sind, und wobei an der Außenseite der Kupplungshülse (2) radial umlaufende, der jeweiligen Verzahnung (6, 7) gegenüberliegende Fixierungsmerkmale (8, 9) von einer der Breite der Verzahnung (6, 7) entsprechenden Breite ausgebildet sind,
ein über die Kupplungshülse (2) konzentrisch schiebbarer Druckring (11) vorgesehen ist, der dazu ausgebildet ist, die Kupplungshülse (2) in nahezu ihrer ganzen Länge zu überdecken, wobei der Druckring (11) an seiner Innenseite radial umlaufende, mit den Fixierungsmerkmalen (8, 9) korrespondierende Vorsprünge (15, 16) aufweist und an seiner Außenseite eine von jedem Ende des Druckringes (11) zu dessen Mitte gerichtete ansteigende kegelförmige Erweiterung (17,18) aufweist,
dem Druckring (11) auf jeder Seite ein den Druckring (11) konzentrisch umgebender Preßring (12, 13) zugeordnet ist, wobei jeder Preßring (12, 13) an seiner Innenseite eine der kegelförmigen Erweiterung (17, 18) entsprechende kegelförmige Erweiterung (19, 20) aufweist, so daß während der axialen Verschiebung der Preßringe (12, 13) gegeneinander aus einer beabstandeten Anfangsposition in eine nahezu abstandslose Endposition über die Vorsprünge (15, 16) und die mit den Vorsprüngen (15, 16) korrespondierenden Fixierungsmerkmale (8, 9) eine radiale Verdrängung der Verzahnungen (6, 7) in die Oberfläche des von der Kupplungshülse (2) aufgenommenen Rohres (4) erfolgt.

2. Vorrichtung nach Anspruch 1, **dadurch gekennzeichnet, daß** die Oberseite des Druckringes (11) bis zur Symmetrieachse B - B stufenförmig ausgeführt ist, wobei einem kegelförmig ansteigenden, ebenförmigen ausgebildeten Abschnitt (30) ein hinterschnittener Abschnitt (31) folgt, der als kegelförmige Verengung ausgeführt ist, wobei diese Folge mehrfach wiederholbar ist und die Innenseite der Preßringe (12, 13) zu den entsprechenden Bereichen des Druckringes (11) komplementär ausgebildet ist.

3. Vorrichtung nach Anspruch 1, **dadurch gekennzeichnet, daß** die Oberseite jedes Preßringes (12, 13) mit einem Paar von radial umlaufenden beabstandeten Nuten (21, 22) zur Aufnahme einer, den Zwischenraum (26) zwischen den Preßringen (12, 13) überbrückenden zylinderförmigen Abdeckhülse (14) ausgebildet ist, wobei die Abdeckhülse (14) an ihren Rändern nach innen gerichtete Kanten (24, 25) aufweist, die mit den umlaufenden Nuten (21, 22) derart in Eingriff gebracht werden, daß sich die Kanten (24, 25) im vorverpreßten Zustand der Rohrkupplung (1) mit der jeweils der Symmetrieachse B - B nächstliegenden Nut (21), im verpressten Zustand der Rohrverbindung (1) auf die daneben liegenden Nuten (22) im Eingriff befindet, wobei sowohl die Kanten (24, 25) als auch die Nuten (21, 22) Auslaufschrägen aufweisen.

4. Vorrichtung nach Anspruch 1, **dadurch gekennzeichnet, daß** in den Vorsprüngen (15, 16) eine radial umlaufende Hohlkehle (33) zur Bildung eines Ausgleichsbereiches ausgebildet ist.

5. Vorrichtung nach Anspruch 1, **dadurch gekennzeichnet, daß** die Preßringe (12, 13) auf einem gemeinsamen Teilkreis (32) angeordnete axial verlaufende Bohrungen zur Aufnahme von zwischen den Preßringen (12, 13) wirkenden Zugelementen aufweisen.

6. Vorrichtung nach Anspruch 5, **dadurch gekennzeichnet, daß** die Bohrungen in dem einen Preßring (12,13) als Durchgangsbohrungen (28), die in dem gegenüberliegenden Preßring (13, 12) als Gewindebohrungen (29) zur Aufnahme von Schrauben (23) ausgebildet sind.

7. Vorrichtung nach Anspruch 1, **dadurch gekennzeichnet, daß** der Druckring (11) aus einer Vielzahl von Segmenten besteht.

8. Vorrichtung nach Anspruch 1 und 7, **dadurch gekennzeichnet, daß** der Druckring (11) auf der Oberseite mit axial verlaufenden, den Bereich der Vorsprünge (15, 16) unberührt lassenden Schlitzen (34) versehen ist.

9. Vorrichtung nach Anspruch 1 und 7, **dadurch gekennzeichnet, daß** zwischen den Segmenten eine elastische, eine symmetrische Verteilung der Segmente auf den Umfang des Druckringes (11) sichernde Distanzmasse eingelagert ist.

10. Vorrichtung nach Anspruch 1, **dadurch gekennzeichnet, daß** in das Ende des Rohres (4) eine Stützhülse (27) einsetzbar ist, wobei die Stützhülse (27) an ihrer Außenseite radial umlaufende Erhebungen zum Ausgleich großer Toleranzen in der Nennweite des Rohres (4) aufweist und wobei die Stützhülse (27) an einer Seite einen Bund aufweist, der das Einsetzen der Stützhülse (27) in das Rohr (4) begrenzt.

11. Vorrichtung zur Herstellung einer druckdichten Rohrkupplung mit mindestens einem Rohrende, bestehend aus einem hülsenförmigen, rotationssymmetrischen Grundkörper, wobei der Grundkörper mindestens einen im wesentlichen zylindrischen, mit Zahnmitteln ausgestatteten Innenraum zur Aufnahme des Rohrendes aufweist, und die Zahnmittel mittels über auf die Außenfläche des Grundkörpers wirkende Pressmittel radial in die Oberfläche des von dem Innenraum aufgenommenen Rohrendes verdrängbar sind, **dadurch gekennzeichnet,**
**daß** die Kupplungshülsc (102) zur Aufnahme zweier bis zur Symmetrieachse C - C einsteckbarer Rohrenden (104) ausgebildet ist,
ein über die Kupplungshülse (102) konzentrisch schiebbarer Druckring (111) vorgesehen ist, der dazu ausgebildet ist, die Kupplungshülse (102) in nahezu ihrer ganzen Länge zu überdecken, wobei der Druckring (111) an seiner Innenseite radial umlaufende, mit der äußeren Fläche der Kupplungshülse (102) korrespondierende Vorsprünge (115, 116) aufweist und an seiner Außenseite eine von jedem Ende des Druckringes (111) zu dessen Mitte gerichtete ansteigende kegelförmige Erweiterung (117,118) aufweist,
dem Druckring (111) auf jeder Seite ein den Druckring (111) konzentrisch umgebender Preßring (112, 113) zugeordnet ist, wobei jeder Preßring (112, 113) an seiner Innenseite eine der kegelförmigen Erweiterung (117, 118) entsprechende kegelförmige Erweiterung (119, 120) aufweist, so daß während der axialen Verschiebung der Preßringe (112, 113) gegeneinander aus einer beabstandeten Anfangsposition in eine nahezu abstandslose Endposition über die Vorsprünge (115, 116) und die mit den Vorsprüngen (115, 116) korrespondierende äußere Fläche der Kupplungshülse (102) eine radiale Verdrängung der Verzahnungen (106, 107) in die Oberfläche des von der Kupplungshülse (102) aufgenommenen Rohres (104) erfolgt.

12. Vorrichtung nach Anspruch 11, **dadurch gekennzeichnet, daß** der Innenraum der Kupplungshülse (102) an seinen Eintrittsenden mit einem umlaufenden Wulst (106) versehen ist, der dem Vorsprung (115) des Druckringes (111) gegenüberliegend angeordnet ist, und daß der Innenraum der Kupplungshülse (102) in seinem der Symmetrieachse C - C naheliegenden Bereich mit einem Paar einer umlaufenden Verzahnung (107) versehen ist, das dem Vorsprung (116) des Druckringes (111) gegenüberliegend angeordnet ist, wobei jedem Rohrende (104) sowohl ein Wulst (106) als auch eine Verzahnung (107) zugeordnet ist.

13. Vorrichtung nach Anspruch 11 und 12, **dadurch gekennzeichnet, daß** die Innenkante der Eintrittsenden der Kupplungshülse (102) gefast oder gerundet sind.

14. Vorrichtung nach Anspruch 11 und 12, **dadurch gekennzeichnet, daß** die Eintrittsenden der Kupplungshülse (102) an ihrem äußeren Umfang einen flachen Wulst (121) aufweisen, der mit einer flachen Nut (122) an der Innenseite der Enden des Druckringes (111) in einer, eine axiale Positionierung von Kupplungshülse (102) und Druckring (111) untereinander ermöglichenden Weise korrespondieren.

15. Vorrichtung nach Anspruch 11, **dadurch gekennzeichnet, daß** der Druckring (111) in der radialen Symmetrieachse D - D in zwei Druckringabschnitte (111'; 111") geteilt ist, die durch einen axialen Zwischenring (140) miteinander kuppelbar sind, wobei der Zwischenring (140) den gleichen Innendurchmesser wie die Druckringabschnitte (111'; 111") aufweist, um die aus den Druckringabschnitten (111'; 111") und dem Zwischenring (140) gebildete Druckringeinheit über die Kupplungshülse (102) gleicher Länge zu schieben.

16. Vorrichtung nach Anspruch 15, **dadurch gekennzeichnet, daß** der Zwischenring (140) an seiner Außenseite mit zwei beabstandeten, umlaufenden, als Anschlag für die zur Symmetrieachse D - D gerichtete Stirnseite des jeweiligen Druckringabschnittes (111'; 111") dienenden Flanschen (141'; 141") ausgebildet ist, wobei der Zwischenring (140) darüber hinaus jeweils einen von dem Flansch (141'; 141") nach außen gerichteten Bereich aufweist, der in einem radial nach außen weisenden Rand (142'; 142") endet und das dem Rand (142'; 142") zugeordnete Ende des Druckringabschnittes (111'; 111") über einen Bereich mit einem gegenüber dem Innendurchmesser vergrößerten Durchmesser verfügt, in dem eine Nut (143'; 143") eingearbeitet ist, die mit dem Rand (142'; 142") in Eingriff steht.

17. Vorrichtung zur Herstellung einer druckdichten Rohrkupplung für fluchtend gegenüberstehende Rohrenden, bestehend aus einem hülsenförmigen, rotationssymmetrischen Grundkörper, wobei der Grundkörper jeweils einen im wesentlichen zylindrischen, mit Zahnmitteln ausgestatteten Innenbereich zur Aufnahme jedes der Rohrenden aufweist, und die Zahnmittel mittels über auf die Außenfläche des Grundkörpers wirkende Pressmittel radial in die Oberfläche des von dem Innenraum aufgenommenen Rohrendes verdrängbar sind, **dadurch gekennzeichnet, daß**
der Grundkörper aus einer hohlzylinderförmigen Kupplungshülse (202) mit im wesentlichen gleichbleibender Wanddicke besteht, wobei in jedem der Innenbereiche der Kupplungshülse (202) mindestens zwei untereinander beabstandete, gegenüber dem Innendurchmesser der Kupplungshülse (202) zurückgesetzte, radial umlaufende Zähne (206) angeordnet sind,
ein Paar über die Kupplungshülse (202) konzentrisch schiebbare Druckringe (211) vorgesehen sind, die dazu ausgebildet sind, die Kupplungshülse (202) jeweils im Abschnitt des Innenbereiches zu umgeben und jeder Druckring (211) an seiner Außenseite eine von jedem Ende des Druckringes (211) zu dessen Mitte gerichtete ansteigende kegelförmige Erweiterung (217, 218) aufweist,
jedem Druckring (211) auf jeder Seite ein den Druckring (211) konzentrisch umgebender Preßring (212, 213) zugeordnet ist, wobei jeder Preßring (212, 213) an seiner Innenseite eine der kegelförmigen Erweiterung (217, 218) entsprechende kegelförmige Erweiterung (219, 220) aufweist, so daß während der axialen Verschiebung der Preßringe (212, 213) gegeneinander aus einer beabstandeten Anfangsposition (245) in eine nahezu abstandslose Endposition (246) eine radiale Verdrängung der Zähne (206) in die Oberfläche des von der Kupplungshülse (202) aufgenommenen Rohres (204) erfolgt.

18. Vorrichtung zur Herstellung einer druckdichten Rohrkupplung nach Anspruch 17, **dadurch gekennzeichnet, daß** an der Außenseite der Kupplungshülse (202) jeweils im Abschnitt des Innenbereiches radial umlaufende Fixierungsmerkmale (235), vorzugsweise als Rillen ausgebildet sind, und der Druckring (211) an seiner Innenseite radial umlaufende, mit den Fixierungsmerkmalen (235) korrespondierende, vorzugsweise als Wülste ausgebildete Fixierungsmerkmale (236) aufweist, wobei die Fixierungsmerkmale (235, 236) eine Fixierung der Kupplungshülse (202) und des Druckringes (211) in einem Vormontagezustand (245) als Baueinheit bewirken, und daß der Druckring (211) an seiner kegelförmigen Erweiterung (217, 218) in der Nähe seines Endes ein Fixierungsmerkmal (237, 238) und in der Nähe seiner Mitte ein weiteres Fixierungsmerkmal (239, 240) aufweist, und der entsprechende Preßring (212, 213) an seiner an der Innenseite ausgebildeten kegelförmigen Erweiterung (219, 220) an seinem dem Druckring (211) zugewandten Ende ein Fixierungsmerkmal (241, 242) und an seinem dem Druckring (211) abgewandten Ende ein weiteres Fixierungsmerkmal (243, 244) aufweist, die mit den auf dem Druckring (211) ausgebildeten Fixierungsmerkmalen in der Weise korrespondieren, daß sich die Fixierungsmerkmale (237/241, 238/242) zur Erhaltung einer Baueinheit in einem Vormontagezustand (245) und die Fixierungsmerkmale (237/243, 239/241, 240/242, 238/244) zur Erhaltung der verpressten Vorrichtung (246) miteinander in Eingriff befinden.

## Claims

1. A device for manufacturing a pressure sealed tube coupling having at least one tube end, comprising a sleeve shaped, rotationally symmetrical basic body wherein said basic body comprising at least one substantially cylindrical interior space equipped with teeth means for receiving the tube end, and said teeth means can be radially displaced into the surface of said tube end received by the interior space by means of pressing means acting on the outer surface of said basic body,
**characterized in that**
said basic body comprises a hollow cylinder shaped coupling sleeve (2) having a substantially constant wall thickness wherein on the inside of said coupling sleeve (2) at least two radially surrounding indentations (6, 7) are located which spaced to one another and recessed in comparison with the inner diameter of said coupling sleeve (2), and wherein radially surrounding locating features (8, 9) which have a width corresponding to the width of said indentation (6, 7) and opposite said respective indentation (6, 7) are formed on the outside of said coupling sleeve (2);
a pressure ring (11) being concentrically slidable over said coupling sleeve (2) is provided which is formed for covering said coupling sleeve (2) in its almost total length wherein on its outside said pressure ring (11) comprises radially surrounding projecting parts (15, 16) corresponding to said locating features (8, 9), and on its outside an increasing cone shaped enlargement (17, 18) which is directed from each end of the pressure ring (11) towards the centre thereof;
a press ring (12, 13) concentrically enclosing said pressure ring (11) is associated to said pressure ring (11) on each side, wherein each said press ring (12, 13) has a cone shaped enlargement (19, 20) corresponding to said cone shaped enlargement (17, 18) on its inside such that during the axial shift of said press rings (12, 13) against each other from a spaced initial position into an almost final position without any distance, a radial displacement of said indentations (6, 7) occurs into said surface of said tube (4) received by said coupling sleeve (2) by means of said projecting parts (15, 16) and said locating features (8, 9) corresponding to said projecting parts (15, 16).

2. A device according to claim 1,
**characterized in that** the top surface of said pressure ring (11) is realized in a stepped way up to the axis of symmetry B-B, wherein a conically increasing section (30) plane formed is followed by an undercut section (31) which is realized as a cone shaped neck, wherein this sequence is repeatable several times, and the inside of said press rings (12, 13) is formed complementarily to the corresponding areas of said pressure ring (11).

3. A device according to claim 1,
**characterized in that** said top surface of said each press ring (12, 13) is formed with a pair of radially surrounding, spaced grooves (21, 22) for receiving a cylindrical covering sleeve (14) spanning the space (26) between said press rings (12, 13) wherein said covering sleeve (14) comprises on its borders inwardly facing edges (24, 25) which are allowed to be brought into engagement with the surrounding grooves (21, 22) such that said edges (24, 25) engage in the pre-pressed condition of said tube coupling (1) with said groove (21) proximal to said axis of symmetry B-B, respectively, and in the pressed condition of said tube connection (1) on said adjacent grooves (22) wherein both said edges (24, 25) and said grooves (21, 22) comprise run-out bevels.

4. A device according to claim 1,
**characterized in that** a radially surrounding flute (33) is formed in said projecting parts (15, 16) for the formation of a balancing area.

5. A device according to claim 1,
**characterized in that** said press rings (12, 13) comprise axially extending bores for receiving tension elements acting between said press rings (12, 13) which are located on a common graduated circle (32).

6. A device according to claim 5,
**characterized in that** said bores in said one press ring (12, 13) are formed as through holes (28), and said ones in the opposite press ring (13, 12) are formed as threaded holes (29) for receiving screws (23).

7. A device according to claim 1,
**characterized in that** said pressure ring (11) comprises a plurality of segments.

8. A device according to claim 1 and 7,
**characterized in that** said pressure ring (11) is provided on said top surface with axially extending slots (34) leaving the area of said projecting parts (15, 16) untouched.

9. A device according to claim 1 and 7,
**characterized in that** a flexible distance mass maintaining a symmetrical distribution of said segments on the circumference of said pressure ring (11) is deposited between said segments.

10. A device according to claim 1,
**characterized in that** a supporting sleeve (27) is insertable into the end of said tube (4) wherein said supporting sleeve (27) comprises on its outside radially surrounding asperities to balance great tolerances in the nominal width of said tube (4), and wherein said supporting sleeve (27) on one side comprises a flange which limits inserting said supporting sleeve (27) into said tube (4).

11. A device for manufacturing a pressure sealed tube coupling having at least one tube end, comprising a sleeve shaped, rotationally symmetrical basic body wherein said basic body at least comprises a substantially cylindrical interior space equipped with teeth means for receiving said tube end, and said teeth means can be radially displaced into the surface of the tube end received by said interior space by means of pressing means acting upon the outer surface of said basic body,
**characterized in that**
said coupling sleeve (102) is formed to receive two tube ends (104) insertable up to the axis of symmetry C-C; a pressure ring (111) being concentrically slidable over said coupling sleeve (102) is provided which is formed for covering said coupling sleeve (102) in its almost total length, wherein on its inside said pressure ring (111) comprises radially surrounding projecting parts (115, 116) corresponding to the outer surface of said coupling sleeve (102), and on its outside an increasing cone shaped enlargement (117, 118) which is directed from each end of said pressure ring (111) towards the centre thereof; a press ring (112, 113) concentrically enclosing said pressure ring (111) is associated to said pressure ring (111) on each side, wherein said each press ring (112, 113) on its inside has a cone shaped enlargement (119, 120) corresponding to said cone shaped enlargement (117, 118) such that during the axial shift of said pressing rings (112, 113) against each other from a spaced initial position into an almost final position without any distance, a radial displacement of said indentations (106, 107) occurs into said surface of said tube (104) received by said coupling sleeve (102) by means of said projecting parts (115, 116) and said outer surface of said coupling sleeve (102) corresponding to said projecting parts (115, 116).

12. A device according to claim 11,
**characterized in that** said interior space of said coupling sleeve (102) is provided on its entering ends with a surrounding swelling (106) which is located opposite said projecting part (115) of said pressure ring (111), and **in that** said interior space of said coupling sleeve (102) in its area proximal to the axis of symmetry C-C is provided with a pair of a surrounding indentation (107) which are located opposite said projecting part (116) of said pressure ring (111) wherein both a swelling (106) and an indentation (107) are associated to said each tube end (104) .

13. A device according to claim 11 and 12,
**characterized in that** said inner edge of said entering ends of said coupling sleeve (102) is canted off or rounded.

14. A device according to claim 11 and 12,
**characterized in that** said entering ends of said coupling sleeve (102) comprise on its outer circumference a flat swelling (121) which corresponds to a flat groove (122) on the inside of the ends of said pressure ring (111) in a way which enables axially positioning said coupling sleeve (102) and said pressure ring (111) to one another.

15. A device according to claim 11,
**characterized in that** said pressure ring (111) is divided in the radial axis of symmetry D-D into two pressure ring portions (111'; 111' ') which can be coupled to each other by an axial intermediate ring (140) wherein said intermediate ring (140) has the same inner diameter as the pressure ring portions (111'; 111") in order to push the pressure ring assembly formed by said pressure ring portions (111'; 111' ') and said intermediate ring (140) over said coupling sleeve (102) having the same length.

16. A device according to claim 15,
**characterized in that** said intermediate ring (140) is formed on its outside with two spaced surrounding flanges (141'; 141' ') serving as a stop for the face directed towards the axis of symmetry D-D of said respective pressure ring portion (111'; 111' '), wherein said intermediate ring (140) moreover comprises an area from the outside facing from said flange (141'; 141' ') respectively, which terminates in an edge (142'; 142 ") radially from the outside facing and the end of said pressure ring portion (111'; 111") associated to said edge (142'; 142") comprises an area having a diameter which is increased in comparison with the inner diameter, in which a groove (143'; 143) engaging said edge (142'; 142) is machined.

17. A device for manufacturing a pressure sealed tube coupling for tube ends opposite in alignment, comprising a sleeve shaped, rotationally symmetrical basic body, wherein said basic body respectively comprises at least one substantially cylindrical interior space equipped with teeth means for receiving each of said tube ends, and said teeth means can be radially displaced into the surface of said tube end received by said interior space by means of pressing means acting upon the outer surface of said basic body, **characterized in that**
said basic body comprises a hollow cylinder shaped coupling sleeve (202) having a substantially constant wall thickness wherein inside each of said interior areas of said coupling sleeve (202) at least two radially surrounding teeth (206) are located which are spaced to one another and recessed in comparison with the inner diameter of said coupling sleeve (202);
a pair of pressure rings (211) being concentrically slidable over said coupling sleeve (202) is provided which are formed for enclosing said coupling sleeve (202), respectively, in the section of said interior area, and each pressure ring (211) on its outside comprises an increasing cone shaped enlargement (217, 218) which is directed from each end of the pressure ring (11) towards the centre thereof;
a press ring (212, 213) concentrically enclosing said pressure ring (211) is associated to said pressure ring (211) on each side, wherein said each press ring (212, 213) on its inside has a cone shaped enlargement (219, 220) corresponding to said cone shaped enlargement (217, 218) such that during the axial shift of said press rings (212, 213) against each other from a spaced initial position (245) into a final position (246) almost without any distance, a radial displacement of said teeth (206) occurs into said surface of said tube (204) received by said coupling sleeve (202).

18. A device for manufacturing a pressure sealed tube coupling according to claim 17,
**characterized in that**
radially surrounding locating features (235) are formed preferably as grooves on the outside of said coupling sleeve (202), respectively, in the section of said interior area, and said pressure ring (211) on its inside comprises radially surrounding locating features (236) preferably formed as swellings corresponding to said locating features (235) wherein said locating features (235, 236) effect a fixing of said coupling sleeve (202) and said pressure ring (211) in a pre-assembly state (245) as a modular unit, and **in that** said pressure ring (211) comprises a locating feature (237, 238) on its cone shaped enlargement (217, 218) in proximity of its end, and another feature (239, 240) in proximity of its centre, and said corresponding press ring (212, 213) comprises a locating feature (241, 242) on its cone shaped enlargement (219, 220) formed on the inside on its end facing to said pressure ring (211), and another locating feature (243, 244) on its end facing off said pressure ring (211) which correspond to said locating features formed on said pressure ring (211) such that said locating features (237/241, 238/242) are engaged with each other to obtain a modular unit in a pre-assembly state (245), and said locating features (237/243, 239/241, 240/242, 238/244) are engaged with each other to obtain said pressed device (246) .

## Revendications

1. Dispositif pour réaliser un raccordement de tubes étanche à la pression avec au moins une extrémité de tube, constitué par un corps de base en forme de douille à symétrie de révolution, le corps de base présentant au moins une chambre intérieure sensiblement cylindrique, munie de moyens dentés et destinée à recevoir l'extrémité de tube, et les moyens dentés étant susceptibles d'être enfoncés radialement dans la surface de l'extrémité de tube reçue par la chambre intérieure par l'intermédiaire de moyens de pressage agissant sur la surface extérieure du corps de base,
**caractérisé en ce que**
le corps de base est constitué par une douille de raccordement (2) de forme cylindrique creuse présentant une épaisseur de paroi sensiblement constante, au moins deux dentures (6, 7) radialement périphériques, écartées l'une de l'autre et décalées par rapport au diamètre intérieur de la douille de raccordement (2) étant agencées sur la face intérieure de la douille de raccordement (2), et des éléments de fixation (8, 9) radialement périphériques, opposés respectivement aux dentures (6, 7) et de largeur correspondant à la largeur de la denture (6, 7) étant réalisés sur la face extérieure de la douille de raccordement (2),
il est prévu une bague de pression (11) susceptible d'être enfilée concentriquement sur la douille de raccordement (2), qui est prévue pour recouvrir la douille de raccordement (2) pratiquement sur toute sa longueur, la bague de pression (11 ) comprenant, sur sa face intérieure, des saillies (15, 16) radialement périphériques correspondant aux éléments de fixation (8, 9), et comprenant, sur sa face extérieure, un élargissement conique (17, 18) montant dirigé depuis chaque extrémité de la bague de pression (11 ) vers son centre,
une bague de pressage (12, 13) entourant concentriquement la bague de pression (11 ) est associée sur chaque côté à la bague de pression (11 ), chaque bague de pressage (12, 13) présentant sur sa face intérieure un élargissement conique (19, 20) correspondant à l'élargissement conique (17, 18), de sorte que pendant la translation axiale des bagues de pressage (12, 13) l'une par rapport à l'autre à partir d'une position initiale écartée jusque dans une position finale pratiquement sans écartement, un enfoncement radial des dentures (6, 7) dans la surface du tube (4) reçu par la douille de raccordement (2) s'effectue via les saillies (15, 16) et via les éléments de fixation (8, 9) correspondants aux saillies (15, 16).

2. Dispositif selon la revendication 1, **caractérisé en ce que** la face supérieure de la bague de pression (11 ) est réalisée en gradins jusqu'à l'axe de symétrie B - B, un tronçon (30) réalisé avec une forme régulière et montant en forme de cône étant suivi par un tronçon (31 ) en contre-dépouille qui est réalisé sous forme de rétrécissement conique, cette succession pouvant se répéter plusieurs fois, et la face intérieure des bagues de pressage (12, 13) étant réalisée de façon complémentaire aux zones correspondantes de la bague de pression (11).

3. Dispositif selon la revendication 1, **caractérisé en ce que** la face supérieure de chaque bague de pressage (12, 13) est réalisée avec une paire de gorges (21, 22) radialement périphériques écartées pour recevoir une douille de recouvrement cylindrique (14) coiffant l'intervalle (26) entre les bagues de pressage (12, 13), la douille de recouvrement (14) présentant sur ses bords des arêtes (24, 25) dirigées vers l'intérieur qui sont amenées en engagement avec les gorges périphériques (21, 22) de telle sorte que dans l'état pré-emmanché du raccordement de tubes (1), les arêtes (24, 25) sont en engagement avec la gorge respective (21) la plus proche de l'axe de symétrie B - B, dans l'état emmanché du raccordement de tubes (1) elles sont en engagement avec la gorge (22) située à côté, aussi bien les arêtes (24, 25) que les gorges (21, 22) présentant des pentes de sortie.

4. Dispositif selon la revendication 1, **caractérisé en ce que** dans les saillies (15, 16) est ménagée une moulure creuse (33) radialement périphérique pour former une zone de compensation.

5. Dispositif selon la revendication 1, **caractérisé en ce que** les bagues de pressage (12, 13) présentent des perçages axiaux ménagés sur un cercle partiel commun (32) et destinés à recevoir des éléments de traction agissant entre les bagues de pressage (12, 13).

6. Dispositif selon la revendication 5, **caractérisé en ce que** les perçages dans l'une des bagues de pressage (12, 13) sont réalisés sous forme de perçages traversants (28), qui, dans la bague de pressage opposée (13, 12) sont réalisés sous forme de perçages taraudés (29) pour recevoir des vis (23).

7. Dispositif selon la revendication 1, **caractérisé en ce que** la bague de pression (11 ) est constituée par une multitude de segments.

8. Dispositif selon les revendications 1 et 7, **caractérisé en ce que** la bague de pression (11 ) est pourvue, sur la face supérieure, de fentes (34) axialement périphériques qui n'affectent pas la zone des saillies (15, 16).

9. Dispositif selon les revendications 1 et 7, **caractérisé en ce qu'**une masse d'écartement élastique est interposée entre les segments, qui assure une réparation symétrique des segments sur la périphérie de la bague de pression (11).

10. Dispositif selon la revendication 1, **caractérisé en ce qu'**une douille de soutien (27) est susceptible d'être mise en place dans l'extrémité du tube (4), la douille de soutien (27) présentant sur sa face extérieure des bosses radialement périphériques pour compenser des grandes tolérances dans la largeur nominale du tube (4), et la douille de soutien (27) comprenant sur un côté une collerette qui limite la mise en place de la douille de soutien (27) dans le tube (4).

11. Dispositif pour réaliser un raccordement de tubes étanche à la pression avec au moins une extrémité de tube, constitué par un corps de base en forme de douille à symétrie de révolution, le corps de base présentant au moins une chambre intérieure sensiblement cylindrique, munie de moyens dentés et destinée à recevoir l'extrémité de tube, et les moyens dentés étant susceptibles d'être enfoncés radialement dans la surface de l'extrémité de tube reçue par la chambre intérieure par l'intermédiaire de moyens de pressage agissant sur la surface extérieure du corps de base,
**caractérisé en ce que**
la douille de raccordement (102) est réalisée pour recevoir deux extrémités de tube (104) susceptibles d'être enfichées jusqu'à l'axe de symétrie C - C, il est prévu une bague de pression (111) susceptible d'être enfilée concentriquement sur la douille de raccordement (102), qui est prévue pour recouvrir la douille de raccordement (102) pratiquement sur toute sa longueur, la bague de pression ( 111 ) comprenant, sur sa face intérieure, des saillies (115, 116) radialement périphériques correspondant à la surface extérieure de la douille de raccordement (102), et comprenant, sur sa face extérieure, un élargissement conique (117, 118) montant dirigé depuis chaque extrémité de la bague de pression (111) vers son centre,
une bague de pressage (112, 113) entourant concentriquement la bague de pression (111 ) est associée sur chaque côté à la bague de pression (111 ), chaque bague de pressage (112, 113) présentant sur sa face intérieure un élargissement conique (119, 120) correspondant à l'élargissement conique (117, 118), de sorte que pendant la translation axiale des bagues de pressage (112, 113) l'une par rapport à l'autre à partir d'une position initiale écartée jusque dans une position finale pratiquement sans écartement, un enfoncement radial des dentures (106, 107) dans la surface du tube (104) reçu par la douille de raccordement (102) s'effectue via les saillies (115, 116) et via la surface extérieure de la douille de raccordement (102) en correspondance avec les saillies (115, 116).

12. Dispositif selon la revendication 11, **caractérisé en ce que** la chambre intérieure de la douille de raccordement (102) est pourvue, à ses extrémités d'entrée, d'un bourrelet périphérique (106) qui est agencé à l'opposé de la saillie (115) de la bague de pression (111), et **en ce que** la chambre intérieure de la douille de raccordement (102) est pourvue, dans sa zone à proximité de l'axe de symétrie C - C, d'une paire de dentures périphériques (107) qui est agencée à l'opposé de la saillie (116) de la bague de pression (111 ), aussi bien un bourrelet (106) qu'une denture (107) étant associés à chaque extrémité de tube (104).

13. Dispositif selon les revendications 11 et 12, **caractérisé en ce que** l'arête intérieure des extrémités d'entrée de la douille de raccordement (102) est chanfreinée ou arrondie.

14. Dispositif selon les revendications 11 et 12, **caractérisé en ce que** les extrémités d'entrée de la douille de raccordement (102) présentent, sur leur périphérie extérieure, un bourrelet plat (121) qui correspond à une gorge plate (122) sur la face intérieure des extrémités de la bague de pression (111), et ceci de manière à permettre un positionnement axial de la douille de raccordement (102) et de la bague de pression (111) l'une par rapport à l'autre.

15. Dispositif selon la revendication 11, **caractérisé en ce que** la bague de pression (111) est subdivisée dans l'axe de symétrie radial D - D en deux tronçons de bague de pression (111' ; 111") qui sont susceptibles d'être raccordés l'un à l'autre par une bague intermédiaire axiale (140), la bague intermédiaire (140) présentant le même diamètre intérieur que les tronçons de bague de pression (111' ; 111") afin d'enfiler l'ensemble de bague de pression, formé par les tronçons de bague de pression ( 111' ; 111 ") et par la bague intermédiaire (140), sur la douille de raccordement (102) de longueur égale.

16. Dispositif selon la revendication 15, **caractérisé en ce que** la bague intermédiaire (140) est réalisée, sur sa face extérieure, avec deux brides (141' ; 141") périphériques écartées, servant de butée pour la face frontale du tronçon de bague de pression respectif (111' ; 111") dirigée vers l'axe de symétrie D - D, la bague intermédiaire (140) présentant en outre une zone dirigée vers l'extérieur à partir de la bride (141' ; 141 "), laquelle zone se termine par un bord (142' ; 142") dirigé radialement vers l'extérieur, et l'extrémité du tronçon de bague de pression (111' ; 111 ") associée au bord (142' ; 142") dispose d'une zone d'un diamètre agrandi par rapport au diamètre intérieur, dans laquelle est ménagée une gorge (143' ; 143") qui est en engagement avec le bord (142' ; 142").

17. Dispositif pour réaliser un raccordement de tubes étanche à la pression pour des extrémités de tubes alignées mutuellement opposées, constitué par un corps de base en forme de douille à symétrie de révolution, le corps de base présentant au moins une chambre intérieure sensiblement cylindrique, munie de moyens dentés et destinée à recevoir chacune des extrémités de tube, et les moyens dentés étant susceptibles d'être enfoncés radialement dans la surface de l'extrémité de tube, reçue par la chambre intérieure, par l'intermédiaire de moyens de pressage agissant sur la surface extérieure du corps de base, **caractérisé en ce que**
le corps de base est constitué par une douille de raccordement (202) de forme cylindrique creuse présentant une épaisseur de paroi sensiblement constante, au moins deux dents (206) radialement périphériques, écartées l'une de l'autre et décalées par rapport au diamètre intérieur de la douille de raccordement (202) étant agencées dans chacune des zones intérieures de la douille de raccordement (202),
il est prévu une paire de bagues de pression (211) susceptible d'être enfilées concentriquement sur la douille de raccordement (202), qui sont prévues pour entourer la douille de raccordement (202) dans le tronçon respectif de la zone intérieure, et chaque bague de pression (211) comprend, sur sa face extérieure, un élargissement conique (217, 218) montant dirigé depuis chaque extrémité de la bague de pression (211 ) vers son centre,
une bague de pressage (212, 213) entourant concentriquement la bague de pression (211) est associée sur chaque côté à chaque bague de pression (211), chaque bague de pressage (212, 213) présentant sur sa face intérieure un élargissement conique (219, 220) correspondant à l'élargissement conique (217, 218), de sorte que pendant la translation axiale des bagues de pressage (212, 213) l'une par rapport à l'autre à partir d'une position initiale écartée (245) jusque dans une position finale (246) pratiquement sans écartement, il se produit un enfoncement radial des dents (206) dans la surface du tube (204) reçu par la douille de raccordement (202).

18. Dispositif pour réaliser un raccordement de tubes étanche à la pression selon la revendication 17, **caractérisé en ce que** sur la face extérieure de la douille de raccordement (202), dans le tronçon respectif de la zone intérieure, il est prévu des éléments de fixation radialement périphériques (235), réalisés de préférence sous forme de rainures, et la bague de pression (211) comprend, sur sa face intérieure, des éléments de fixation (236) radialement périphériques réalisés de préférence sous forme de bourrelets et correspondant aux éléments de fixation (235), les éléments de fixation (235, 236) procurant une fixation de la douille de raccordement (202) et de la bague de pression (211) sous forme d'unité structurelle dans un état de pré-assemblage (245), et **en ce que** la bague de pression (211 ) comprend, sur son élargissement conique (217, 218) à proximité de son extrémité, un élément de fixation (237, 238) et à proximité de son centre un autre élément de fixation (239, 240), et la bague de pressage correspondante (212, 213) présente sur son élargissement conique (219, 220) réalisé sur sa face intérieure, à son extrémité tournée vers la bague de pression (211), un élément de fixation (241, 242) et à son extrémité détournée de la bague de pression (211) un autre élément de fixation (243, 244) qui correspondent aux éléments de fixation réalisés sur la bague de pression (211), de telle sorte que les éléments de fixation (237/241, 238/242) sont en engagement mutuel pour obtenir une unité structurelle dans un état de pré-assemblage (245), et les éléments de fixation (237/243, 238/241, 240/242, 238/244) sont en engagement mutuel pour obtenir le dispositif emmanché (246).
